# EUROPÄISCHE PATENTSCHRIFT

(11) **EP 1 791 619 B1**
(45) Veröffentlichungstag und Bekanntmachung des Hinweises auf die Patenterteilung: **23.09.2009**
(21) Anmeldenummer: 05793030.7
(22) Anmeldetag: 27.09.2005
(51) Int. Cl.: B01D 53/26, B01D 53/22, B01D 63/02, B01D 45/16, B01D 53/24

(54) **TROCKNEREINHEIT FÜR DRUCKLUFT UND ANDERE GASFÖRMIGE MEDIEN**
DRYER UNIT FOR COMPRESSED AIR AND OTHER GASEOUS MEDIA
UNITE DE SECHAGE POUR AIR COMPRIME ET AUTRES SUBSTANCES GAZEUSES

(30) Priorität: 27.09.2004 DE 102004047216; 01.10.2004 DE 102004048438
(43) Veröffentlichungstag der Anmeldung: 06.06.2007
(60) Teilanmeldung: 08009695.1
(73) Patentinhaber: Dürr Dental AG, 74321 Bietigheim-Bissingen (DE)
(72) Erfinder: DEUBLER, Alfred, 71691 Freiberg (DE); FISCHER, Valeriu, 74321 Bietigheim-Bissingen (DE)
(74) Vertreter: Ostertag, Reinhard
(86) Internationale Anmeldenummer: PCT/EP2005/010424
(87) Internationale Veröffentlichungsnummer: WO 2006/034840

(56) Entgegenhaltungen:
- US-B1- 6 296 683
- PATENT ABSTRACTS OF JAPAN Bd. 1999, Nr. 05, 31. Mai 1999 (1999-05-31) -& JP 11 033338 A (KURODA PRECISION IND LTD), 9. Februar 1999 (1999-02-09)
- PATENT ABSTRACTS OF JAPAN Bd. 2000, Nr. 25, 12. April 2001 (2001-04-12) -& JP 2001 219026 A (NABCO LTD), 14. August 2001 (2001-08-14)

## Beschreibung

Die Erfindung betrifft eine Trocknereinheit für Druckluft und andere gasförmige Medien gemäß dem Oberbegriff des Anspruches 1.

Eine derartige Trocknereinheit mit Membranfaser-Trocknerpatrone kann der JP 11 033338 A (Patent Abstracts of Japan Bd. 1999. Nr. 5 vom 31.05. 1999) oder auch der JP 2001 219026 A (Patent Abstracts of Japan Nr. 25 vom 14. 08.1999) entnommen werden.

Bei diesen bekannten Einheiten ist das Auslassventil ein Rückschlagventil und steuert zugleich einen Spülluftstrom so, dass ein solcher nur fließt, wenn das Rückschlagventil geöffnet ist.

Insbesondere beim Einsatz für medizinische und zahnmedizinische Zwecke wird trockene Druckluft benötigt. In entsprechenden Druckluftanlagen finden daher Trocknereinheiten Verwendung, die der am Ausgang eines Verdichters bereitgestellten Druckluft Feuchtigkeit entziehen.

Dabei sind unter anderem Trocknereinheiten wie die eingangs angesprochenen bekannt, bei denen der komprimierten Luft das Wasser unter Verwendung von Membranen entzogen wird, die nur für Wasserdampf durchlässig sind. Diese nach dem Membranprinzip arbeitenden Trocknereinheiten arbeiten aber nur im kontinuierlichen Betrieb zufriedenstellend. Die dampfreiche Luft strömt durch die Hohlfaser-Membran, wobei die Dampfanteile durch die Faserwände hindurchtreten. Dieser ausgetretene Wasserdampf wird unter Verwendung eines Teilstromes der getrockneten Luft aus dem Gehäuse der Trocknereinheit ausgetragen, der von der am Ausgang der Trocknereinheit erhaltenen Luftmenge über eine Drosselstelle abgezweigt wird.

In der Anfahrphase werden große Feuchtigkeitsmengen eingetragen, es steht aber nicht ausreichend Spülluft zur Verfügung, da im System zunächst der Druck aufgebaut werden muss. Damit wird auch der Wasserdampf von der Außenseite der Membranfasern nicht ausreichend abgeführt. Dem Druckbehälter wird somit in der Anlaufphase der Anlage Luft mit hohem Wassergehalt (hoher Taupunkt) zugeführt.

Gerade die im medizinischen und zahmedizinischen Bereich eingesetzen Drucklufterzeugereinheiten werden aber sehr ungleichmäßig beansprucht und daher häufig ein- und ausgeschaltet, so daß die oben angeführten Nachteile schwer wiegen.

Durch die vorliegende Erfindung soll daher eine Trocknereinheit gemäß dem Oberbegriff des Anspruches 1 so weitergebildet werden, dass eine bessere Wasserdampfabtrennung auch in der Anlaufphase erhalten wird.

Diese Aufgabe ist erfindungsgemäß gelöst durch eine Trocknereinheit mit den im Anspruch 1 bzw. 2 angegebenen Merkmalen.

Bei der erfindungsgemäßen Trocknereinheit besteht zwischen dem Auslass-seitigen Kopfraum des Gehäuses und dem Druckluft-Vorratsbehälter und den zu diesen führenden Leitungen in der Anlaufphase keine oder nur eine reduzierte Strömungsverbindung. Damit wird erreicht, dass sich der Druck in der Trocknereinheit sehr rasch aufbaut, damit auch rasch Spülluft bereit steht, welche an den Außenseiten der Membranfasern entlang streichen kann, und damit ein rasches Erreichen der Sollarbeitsbedingungen in der Trocknereinheit selbst gewährleistet ist.

Wenn die Trocknereinheit dann ihren stationären Zustand erreicht hat, kann die Strömungsverbindung zum Druckluft-Vorratsbehälter ganz oder zunehmend freigegeben werden.

Das Einstellen des Öffnungsquerschnittes des Auslassventiles kann dabei gemäß Anspruch 1 in Abhängigkeit von im Auslass-seitigen Kopfraum herrschenden Druck erfolgen. Eine Steuerung des Ventiles auf Zeitbasis oder in Abhängigkeit vom Feuchtigkeitsgehalte der abgegebenen Spülluft ist gleichermaßen möglich. Die verschiedenen Steuerungsarten können auch gemischt verwendet werden.

Auch die Variante der Erfindung gemäß Anspruch 2 gestattet es, die Strömungsverbindung zwischen Trocknereinheit und Druckluft-Vorratsbehälter progressiv freizugeben. Hierdurch wird einerseits ein schnelles Wiederauffüllen des Druckluft-Vorratsbehälters gewährleistet, andererseits ein zu starkes Sinken des Druckes in der Trocknereinheit verhindert, welches zu den oben genannten Nachteilen führen könnte.

Mit der Weiterbildung der Erfindung gemäß Anspruch 3 ist auf sehr einfache Weise sichergestellt, dass der Druck im Auslass-seitigen Kopfraum nicht unter einen vorgegebenen Druck absinkt.

Bildet man das Auslassventil gemäß Anspruch 4 aus, so hat es besonders einfache Geometrie. Man kann bei einem solchen Ventil auch die Einlass-seitig mit Druck beaufschlagten Flächen und die Auslass-seitig mit Druck beaufschlagten Fläche des Steuerelementes auf dessen gleiche Seite legen, so dass das Steuerelement im Offenzustand durch den Druck des gesteuerten Mediums verriegelt wird. Dies gewährleistet einen großen Durchströmquerschnitt des Auslassventiles unter stationären Arbeitsbedingungen.

Die Weiterbildungen der Erfindung gemäß den Ansprüchen 4 und 5 sind im Hinblick auf einen einfachen und mechanisch zuverlässigen Aufbau des Auslassventiles von Vorteil.

Auch mit der Weiterbildung der Erfindung gemäß Anspruch 7 ist gewährleistet, dass der Druck im Auslass-seitigen Kopfraum der Trocknereinheit nicht unter einen Mindestwert absinkt. Bei der Trocknereinheit gemäß Anspruch 7 ist es auch möglich, den Schaltpunkt des Auslassventiles auf einfache Weise durch Verstellen eines elektronischen Referenzwertgebers zu ändern. Man kann also die Trocknereinheit ohne mechanische Eingriffe an spezielle Arbeitsbedingungen anpassen, z. B. unterschiedlich feuchte Ansaugluft, Verwendung unterschiedlicher Membranfasern, unterschiedliche Anforderungen an den Trocknungsgrad der Luft usw.

Auch ist es bei einer Trocknereinheit gemäß Anspruch 7 auch möglich, den Strömungsweg zwischen Trocknereinheit und Druckluft-Vorratsbehälter progressiv freizugeben, indem man das Magnetventil im Impulsbetrieb betreibt und das Verhältnis zwischen Offenzeit und Schließzeit einstellt, was mit bekannten elektronischen Mitteln wieder auf einfache Weise und ohne mechanischen Eingriff in die Trocknereinheit möglich ist.

Die Steuerung des Ventil-Tastverhältnisses kann in Abhängigkeit vom Druck im Auslaß-seitigen Kopfraum, auf Zeitbasis oder in Abhängigkeit vom Feuchtigkeitsgehalte der abgegebenen Spülluft ist gleichermaßen möglich. Die verschiedenen Steuerungsarten können auch gemischt verwendet werden.

Enthält Luft sehr hohe Feuchtigkeitsanteile, so ist es möglich, dass schon nach Passieren eines dem Auslass des Verdichters nachgeschalteten Kühlers in der Luft flüssige Anteile in Form feiner Tröpfchen oder Aerosole ausgeschieden werden. Typischerweise sind Membranfasern auf ihrer Innenseite mit einer besonderen Beschichtung versehen, die selektiv für Wassermoleküle durchlässig ist. Diese Beschichtungen sind auf Grund ihrer Natur wasserlöslich. Kommen sie mit wassertröpfchen oder Aerosol in Berührung, kann die Beschichtung Schaden nehmen, so dass die Trocknereinheit bleibend geschädigt wird.

Nachstehend wird die Erfindung an Hand von Ausführungsbeispielen unter Bezugnahme auf die zeichnung näher erläutert. In dieser zieigen:
- Figur 1:: einen axialen Schnitt durch eine Druckluft-Trock- nereinheit eingebaut in eine Druckluftanlage für eine Zahnarztpraxis;
- Figur 2:: einen weiteren axialen Schnitt durch die in Figur 1 gezeigte Trocknereinheit in einer zur Zeichenebene von Figur 1 senkrechten Ebene;
- Figur 3:: eine vergrößerte Darstellung eines unteren Kopfteiles der in Figur 1 gezeigten Trocknerein- heit;
- Figur 4:: eine vergrößerte Darstellung eines oberen Kopf- teiles der in Figur 1 gezeigten Trocknereinheit;
- Figuren 5 und 6:: ähnliche Ansichten wie Figur 4, in denen Varianten der Steuerung der Strömungsverbindung zwischen Trocknereinheit und einem nachgeschal- teten Druckluft-vorratsbehälter gezeigt sind;
- Figuren 7 und 8:: ähnliche Darstellungen wie Figur 1, in welchen jedoch eine abgewandelte Trocknerein- heit widergegeben ist;
- Figur 9:: eine vergrößerte Darstellung eines oberen Kopf- teiles der in den Figuren 7 und 8 gezeigten Trocknereinheit; und
- Figur 10:: eine ähnliche Ansicht wie Figur 9, in welcher eine weitere variante des Kopfteiles gezeigt ist.

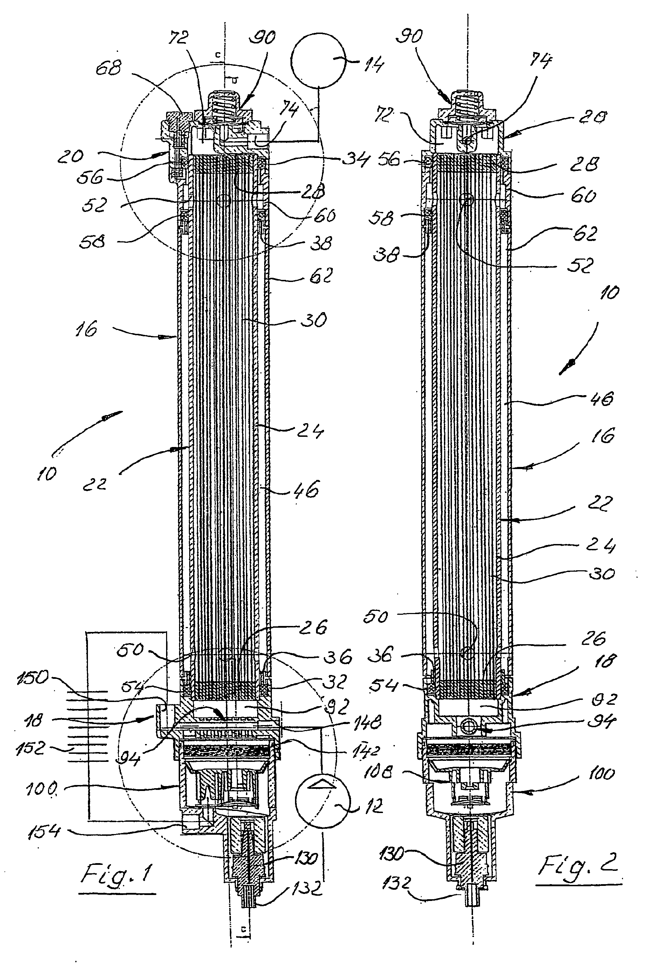

In den Figuren 1 bis 4 ist mit 10 insgesamt eine Trocknereinheit bezeichnet, die Luft von einem Verdichter 12 erhält und von Feuchtigkeit weitgehend befreite Druckluft an einen Druckluft-Vorratsbehälter 14 abgibt.

Die Trocknereinheit 10 umfasst ein zylindrisches Gehäuseteil 16, welches an seinen Enden durch ein unteres Kopfstück 18 bzw. ein oberes Kopfstück 20 verschlossen ist. Im Inneren des Gehäuseteiles 16 und in die Kopfstücke 18 und 20 mit seinen Enden hineinragend ist eine insgesamt mit 22 bezeichnete Trocknerpatrone angeordnet.

Diese umfasst ihrerseits eine zylindrische Patronenhülse 24, die an ihren Enden durch Halteplatten 26, 28 verschlossen ist. In die Halteplatten 26 und 28 sind die Enden einer großen Anzahl hohler Membranfasern 30 eingebettet, und zwar so, dass die Enden der Membranfaser offen sind.

Die Membranfasern können in der Praxis aus PES (Polyethersulfon) oder PEI (Polyetherimid) bestehen. Der Durchmesser der Membranfasern kann im Bereich von 100 bis 3000µm liegen, ihre Wandstärke bei 20 bis 1000 µm.

Damit das Wandmaterial der Membranfasern 30 eine starke spezifische Durchlässigkeit für Wasserdampf aufweist, ist die Innenseite der Membranfasern 30 mit einer Beschichtung versehen, die auf Grund ihrer Natur stark hydrophil ist. Damit ist sie aber auch wasserlöslich.

Die Trocknerpatrone 22 wird zum Beispiel so hergestellt, dass man die Membranfasern 30 zu einem entsprechenden Bündel zusammenlegt und die Halteplatten 26 und 28 durch Tränken zweier von den Enden des Membranfaserbündels nach innen beabstandeter Bereiche mit Harz herstellt. Die Membranfasern 30 werden dann bei den Enden der Halteplatten 26 und 28 abgeschnitten, so dass das Innere der Membranfasern frei zugänglich bleibt.

Die Kopfstücke 18 und 20 haben jeweils einen zylindrischen Schürzenabschnitt 32 bzw. 34, der zu dem zylindrischen Gehäuseteil 16 passt.

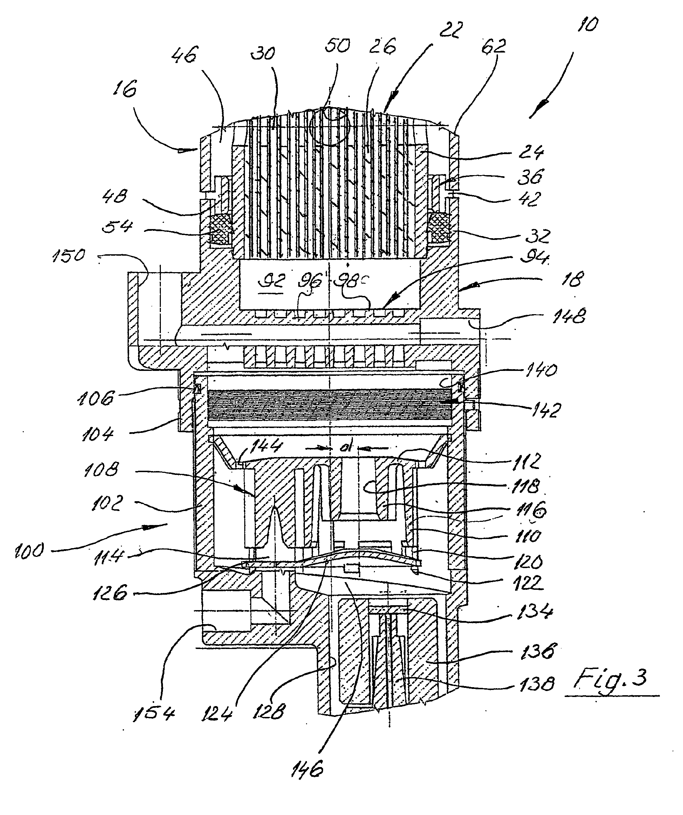

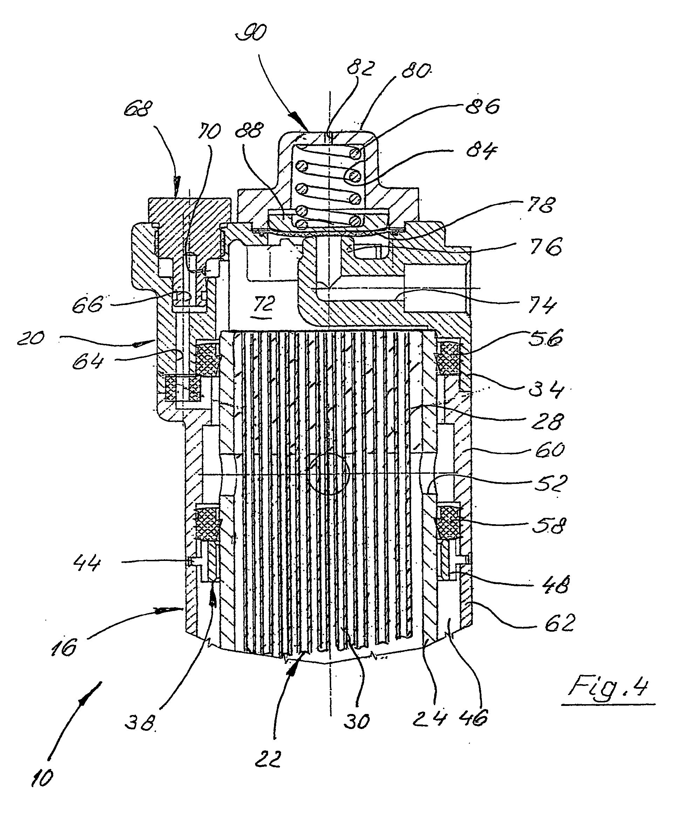

An den Stoßstellen zwischen dem Schürzenabschnitt 32 und dem zylindrischen Gehäuseteil 16 bzw. zwischen zwei Segmenten 60 und 62 des Gehäuseteiles 16 sind Verbindungsringe 36, 38 vorgesehen. Diese haben, wie insbesondere aus den Figuren 3 und 4 ersichtlich, T-förmigen transversalen Querschnitt und sitzen mit einem nach außen ragenden mittigen Flansch 42, 44 zwischen den gegenüberliegenden Stirnflächen von Schürzenbachnitt 32 und Gehäuseteil 16 bzw. den Segmenten 60, 62.

Wie aus der Zeichnung ersichtlich, hat die Patronenhülse 24 kleineren Durchmesser als das Gehäuseteil 16, so dass ein Ringraum 46 erhalten wird.

Wie aus Figur 3 ersichtlich, hat der Verbindungsring 36 nach außen offene Nuten 48, die in Umfangsrichtung verteilt sind. Auf diese Weise erhält man einen unteren Auslass-Schlitz für den Ringraum 46.

Der Ringraum 46 steht über vier im unteren Abschnitt der Patronenhülse 24 vorgesehene in Umfangsrichtung gleich verteilte Öffnungen 50 mit dem Inneren der Patronenhülse 24 in Verbindung. Ähnlich sind beim oberen Abschnitt der Patronenhülse 24 vier in Umfangsrichtung gleich verteilte Öffnungen 52 vorgesehen.

Die Trocknerpatrone 22 ist in dem durch die Kopfstücken 18, 20 und das Gehäuseteil 16 gebildeten Gehäuse unter Verwendung dreier Dichtring gehalten. Ein unterer Dichtring 54 dichtet den Schürzenabschnitt 32 des Kopfstückes 18 gegen das untere Ende der Patronenhülse 24 ab.

Ein oberster Dichtring 56 dichtet in ähnlicher Weise das obere Ende der Patronenhülse 24 gegen das obere Kopfstück 20 ab. Wie aus der Zeichnung ersichtlich, liegen die Dichtrings 54, 56 axial jenseits der Öffnungen 50 und 52.

Ein zusätzlicher Dichtring 58 ist unterhalb der Öffnungen 52 vorgesehen und dichtet die Außenfläche der Patronenhülse 24 wieder gegen das Gehäuseteil 16 ab.

Um die Anbringung dieses Dichtringes zu ermöglichen, ist die Patronenhülse 24 etwas unterhalb des Dichtringes 58 gespalten, wobei an der Stoßstelle zwischen dem oberen Endsegment 60 und dem Hauptsegment 62 des Gehäuseteiles 16 der obere Verbindungsring 38 angeordnet ist.

Der zwischen den Dichtringen 56 und 58 liegende axiale Abschnitt des Ringraumes 46, der mit den Öffnungen 52 in Verbindung steht, steht über einen Kanal 64 und nicht näher mit Bezugszeichen versehene Durchgänge des Gehäuses und im oberen Kopfstück 20 mit einer Zentralbohrung 66 einer Düsenschraube 68 in Verbindung. Diese hat eine mit 70 bezeichnete Drosselbohrung, die mit einem oberen Kopfraum 72 im oberen Kopfstück 20 in Verbindung steht. Der Kopfraum 72 ist durch das Kopfstück 20 und die obere Halteplatte 28 begrenzt.

Im oberen Kopfstück 20 ist ferner ein abgewinkelter Auslasskanal 74 vorgesehen, welcher einen vertikal nach oben verlaufenden Rohrstutzen 76 umfasst. Der Rohrstutzen 76 bildet mit seiner oberen Stirnfläche einen Ventilsitz, der mit einer ventilmembran 78 zusammenarbeitet. Letztere ist kreisförmig und koaxial zum Rohrstutzen 76 angeordnet.

Die Ventilmembran 78 ist zwischen der Oberseite des Kopfstückes 20 und einem Ventilgehäuse 80 eingespannt, welches durch nicht näher gezeigte Schrauben mit dem Kopfstück 20 verbunden ist.

Das Ventilgehäuse 80 ist mit einer über eine Entlüftungsöffnung 82 mit der Umgebung in verbidung stehenden Federkammer 84 ausgebildet, welche eine Schraubenfeder 86 aufnimmt. Deren unteres Ende greift über einen abgerundeten Federsitz 88 an der Oberseite der Ventilmembran 78 an.

Die Stärke der Schraubenfeder 86 ist so gewählt, dass das die oben beschriebenen Komponenten 78 bis 88 umfassende Auslassventil 90 der Trocknereinheit bei einem Druck öffnet, bei welchem gewährleistet ist, dass über die Drosselbohrung 70 eine ausreichende Menge an Spülluft den oberen Öffnungen 52 der Patronenhülse 24 zugeführt wird. Die Spülluft strömt dann im Inneren der Patronenhülse 24 zwischen den Membranfasern 30 nach unten, verlässt die Patronenhülse 24 unten durch die Öffnungen 50, und verlässt das Gehäuse der Trocknereinheit durch den ringförmigen Auslass-Schlitz beim unteren Verbindungsring 36.

Die untere Halteplatte 26 der Trocknerpatrone 22 begrenzt zusammen mit dem unteren Kopfstück 18 einen unteren Kopfraum 92. Dieser hat größere axiale Erstreckung als der obere Kopfraum 72, um dort einen transversalen, die Kopfraumachse schneidenden Wärmetauscher 94 anzuordnen. Der Wärmetauscher 94 umfasst ein zentrales horizontales Wärmetauscherrohr 96, auf welchem transversale, vertikal ausgerichtete Wärmetauscherrippen 98 sitzen.

Beim hier betrachteten Ausführungsbeispiel ist der Wärmetauscher 94 einstückig mit dem unteren Kopfstück 18. Es kann sich bei dem Wärmetauscher 94 aber auch um ein getrenntes Metallteil handeln, welches aus besonders gut wärmeleitendem Metall hergestellt ist.

Auf der Unterseite des unteren Kopfstückes 18 ist (vgl. inbsbesondere Figur 3) ein insgesamt mit 100 bezeichneter Zyklon angeordnet.

Dieser umfasst ein im Wesentlichen becherförmiges Gehäuse 102, welches mit seinem oberen Ende in eine herabhängende passende Schürze 104 des Kopfstückes 18 eingreift und über eine Dichtung 106 gegen diese abgedichtet ist.

In das Gehäuse 102 ist ein Zyklonteil 108 eingesetzt. Dieses hat eine in umfangsrichtung verlaufende zyklonwand 110 und eine obere Abschlusswand 112, die als flache kegelstumpfförmige Schale ausgebildet ist.

Die Achse der Zyklonwand 110 ist von der Achse der Trocknereinheit seitlich versetzt angeordnet, wie aus den Figuren ersichtlich. Der Achsabstand ist in der Zeichnung mit d bezeichnet.

Im unteren Abschnitt des zyklonteils 108 ist ein abgewinkelter Einlasskanal 154 ausgebildet, der mit einem Einlass-Stutzen 114 des Zyklonteils 108 in Verbindung steht. Der durch den Einlass-Stutzen 114 vorgegebene Zyklon-Einlasskanal liegt im oberen Abschnitt in horizontaler Richtung um und mündet tangential in die Innenfläche der Zyklonwand 110.

Von der Abschlusswand 112 des Zyklonteils 108 hängt eine zylindrische Trennwand 116 nach unten, welche einen Auslasskanal 118 des Zyklonteils 108 begrenzt.

Am unteren Ende der Zyklonwand 110 sind mehrere in Umfangsrichtung verteilte elastische Haltefinger 120, vorgesehen, die an ihren unteren Enden mit nach innen weisenden Haltenasen 122 versehen sind.

Die Haltefinger 120 arbeiten mit dem Rand einer Abtropfscheibe 124 zusammen, die von oben gesehen konvex gekrümmt ist. Die Abtropfscheibe 124 hat an ihrem Rand vorspringende Zähne 126, mit denen sie in die zwischen den Haltefingern 120 liegenden Rücksprünge eingreift. Auf diese weise ist die Abtropfnase 124 axial verschiebbar, jedoch verdrehsicher vom unteren Rand der Zyklonwand 110 gehalten.

Das Anbringen der Abtropfscheibe 124 an dem Zyklonteil 108 kann einfach durch Aufrasten erfolgen.

In einem untersten Abschnitt des Zyklongehäuses 102 ist ein Sumpf 128 für abgeschiedene Flüssigkeiten vorgesehen. Dieser Sumpf steht über eine zapfenförmige ausgebildete Auslassarmatur 130 mit einem Auslass-Stutzen 132 in Verbindung. Die Auslassarmatur 130 hat einen zentralen Kanal, der in die verminderten Durchmesser aufweisende Stirnfläche der Auslassarmatur 130 ausmünden. Diese Ausmündungsstelle bildet einen Ventilsitz, mit welchem eine Ventilscheibe 134 zusammenarbeitet. Letztere ist von einem Schwimmer 136 getragen, der auf einem verminderten Durchmesser aufweisenden Führungsabschnitt 138 der Auslassarmatur 130 axial verschiebbar angeordnet ist.

In einem oberen Endabschnitt des Zyklongehäuses 102 ist eine Filterkammer 140 ausgebildet, in welcher ein Rückhaltefilter 142 für kleinste Flüssigkeitströpfchen und Aerosol angeordnet ist. Das Filtermaterial des Rückhaltefilters 142 ist ein hydrophobes Vliesmaterial oder ein hydrophobes Sintermaterial.

Flüssigkeitsanteile, die im Rückhaltefilter 142 zurückgehalten werden, tropfen vom Rückhaltefilter 142 nach unten und in die durch die Abschlusswand 112 gebildete Schale. Von dort gelangen sie im Boden der schale vorgesehene Ablauföffnung 144 in den Ringraum, der zwischen der Außenfläche des Zyklonteils 108 und der Innenwand des Zyklongehäuses 102 liegt. Dort gelangt die abtropfende Flüssigkeit dann über eine schräge Bodenfläche 146 zum Sumpf 128. wie aus der Zeichnung ersichtlich, wird bei der installierten Trocknereinheit ein Einlass 148, der mit dem Wärmetauscher 94 in Verbindung steht, mit dem Auslass des Verdichters 12 verbunden.

Ein Zwischenauslass 150 der Trocknereinheit, der mit dem Auslass des Wärmetauscher 94 in Verbindung steht, ist mit dem Eingang eines Lamellenkühlers 152 verbunden. Dessen Auslass ist mit dem.Einlasskanal 154 des Zyklons 100 verbunden.

Die oben beschriebene Trocknereinheit arbeitet folgendermaßen:

Bei abgeschaltetem Verdichter 12 ist zunächst der Druckluft-Vorratsbehälter 14 vom Inneren der Trocknereinheit 10 getrennt, da der Innenraum der Trocknereinheit 10 druckfrei ist und unter diesen Bedingungen die Kraft der Schraubenfeder 86 ausreicht, die Ventilmembran 78 in fester Anlage an die Oberseite des Rohrstutzen 76 zu halten.

Wird der Verdichter 12 wieder eingeschaltet, so wird zunächst in der Trocknereinheit Druck aufgebaut. Mit dem Druckaufbau im oberen Kopfraum 20 beginnt dann schon Spülluft über die Drosselbohrung 70 und durch das Innere der Patronenhülse 24 zu strömen. Diese Spülluft nimmt zwischen den Membranfasern 30 befindliche Feuchtigkeit mit.

Erreicht der Druck im oberen Kopfraum 72 einen solchen Wert, dass durch die Gesamt-Druckbeaufschlagung der Ventilmembran 78 die Kraft der Schraubenfeder 86 überwunden wird, so wird eine Strömungsverbindung zwischen dem oberen Kopfraum 72 und dem Druckluft-Vorratsbehälter freigeschaltet. Ab diesem Zeitpunkt wird dann getrocknete Luft von der Trocknereinheit 10 an den Druckluft-vorratsbehälter 14 abgegeben. Beim Strömen der Feuchtigkeit enthaltenden Luft durch die Membranfasern 30 treten dann die Wasserdampfanteile zu einem großen Teil durch die Faserwände hindurch, so dass die abgegebene Luft einen niederen Wassergehalt aufweist, also gut getrocknet ist.

Von der den oberen Kopfraum 72 erreichenden trockenen Luftmenge wird über die Drosselbohrung 70 ein vorgegebener Anteil abgespalten, und wie oben beschrieben dazu verwendet, die durch die Wände der Membranfasern 30 hindurchgetretenen Wasserdampfanteile aus der Patronenhülse 24 und aus der Trocknereinheit auszuspülen.

Die vom Verdichter 12 zugeführte Druckluft ist heiß (mehr als 100°C) und gibt einen Teil ihrer Wärme beim Durchströmen des Wärmetauschers 94 an die den unteren Kopfraum 92 durchströmende Druckluft ab. Etwaige restliche kondensierte Flüssigkeitsanteile, die hinter dem Zyklon 100 und hinter dem Rückhaltefilter 142 etwa noch in der Druckluft enthalten sind, werden durch die zugeführte Wärme in Dampfanteile umgewandelt. Es gelangen somit keine kondensierten Anteile in die Membranfasern 30, wo sie deren Beschichtung beschädigen könnten.

Die den Wärmetauscher 94 verlassende Luft wird im Lamellenkühler 152 abgekühlt. Die hierbei entstehenden Tröpfchen werden im Zyklon 100 abgetrennt. Etwa noch verbleibende sehr kleine Tröpfchen und Aerosol-Anteile werden im Rückhaltefilter 142 zurückgehalten. Damit ist die in die Membranfaser 30 unten eintretende Luft schon gut vorgetrocknet.

Die Flüssigkeitsanteile, die im Rückhaltefilter 142 und dem Zyklon 100 abgeschieden werden, gelangen in den Sumpf 128 und werden durch die Schwimmer-betätigte Ventilscheibe 134 in Abständen automatisch abgelassen.

Alternativ kann der Schwimmer 136 einen Kontakt betätigen, durch den ein Magnetventil oder ein pneumatisch betätigtes Ventil gesteuert wird.

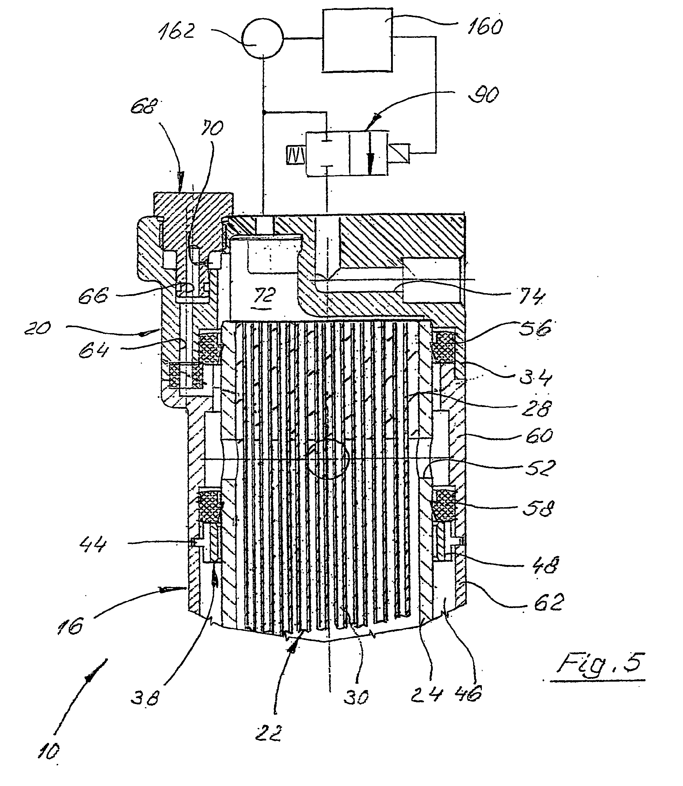

Beim Ausführungsbeispiel nach Figur 5 ist das Auslassventil 90 als Magnetventil ausgebildet. Die Ansteuerung dieses Magnetventiles erfolgt nun über eine Steuerschaltung 160, die in Abhängigkeit vom Ausgangssignal eines Druckfühlers 162 arbeitet, der mit dem oberen Kopfraum 72 kommuniziert.

Vorzugsweise arbeitet die Steuerschaltung 160 so, dass sie das Auslassventil 90 im Impulsbetrieb betreibt. Dabei kann die Steuerschaltung 160 so arbeiten, dass sie das Auslassventil 90 vollständig geschlossen hält, bis der Druck im Auslass-seitigen Kopfraum 72 einen vorgegebenen Wert erreicht, der zur Erzeugung eines ausreichenden Spülluftstromes genügt. Mit Erreichen dieses vorgegebenen Druckwertes arbeitet die Steuerschaltung 160 dann so, dass sie in einer Übergangsphase das Tastverhältnis zwischen Offenzeit und Schließzeit des Auslassventiles 90 progressiv erhöht, bis im Auslass-seitigen Kopfraum 72 der für stationäres Arbeiten der Troacknereinheit gewünschte Druck erreicht ist. Ab diesem Zeitpunkt bleibt dann das Tastverhältnis unverändert. Alternativ kann man ab diesem Zeitpunkt das Auslassventil 90 in bleibende Offenstellung steuern.

In Abwandlung kann man den Druckfühler 162 auch weglassen und die Steuerung des Verhältnisses zwischen Offenzeit und Schließzeit in Abhängigkeit von der seit Einschalten der Anlage verstrichenen Zeit vornehmen.

In nochmaliger Abwandlung kann man anstelle des Druckfühlers 162 einen Feuchtigkeitsfühler verwenden, der im Strom der über den Verbindungsring 36 abgegebenen verbrauchten Spülluft liegt.

In nochmaliger Abwandlung kann auch die obigen Steuerungsmöglichkeiten alle oder teilweise kombinieren.

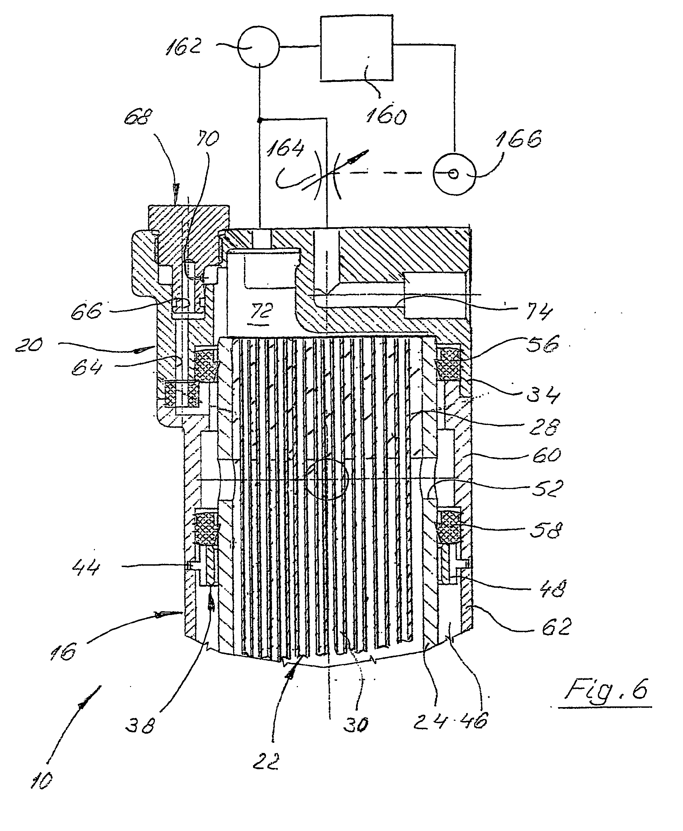

Bei der Ausführungsform nach Figur 6 ist anstelle des Auslassventiles 90 eine einstellbare Drossel 164 vorgesehen, deren Durchströmquerschnitt durch einen stellmotor 166 eingestellt wird. Bei diesem Ausführungsbeispiel wird der Stellmotor 166 durch eine abgewandelte Steuerschaltung 160 aktiviert, die wieder mit einem mit dem oberen Kopfraum 72 in Verbindung stehenden Druckfühler 162 zusammenarbeitet.

Ist der Druck im oberen Kopfraum 72 in der Anlaufphase der Trocknereinheit 10 zunächst klein, so stellt die Steuerschaltung 160 die Drossel 164 in ihre stärkste Drosselstellung. Damit kann sich der Druck im oberen Kopfraum 72 wieder rasch auf den gewünschten Mindestdruck aufbauen, der für die Gewährleistung der Spülluftversorgung notwendig ist. Ab diesem Zeitpunkt kann die steuerschaltung 160 dann die Drossel 164 zunehmend öffnen, so dass dann zunehmend trockene Luft in den Druckluft-Vorratsbehälter 14 abgegeben wird.

Es versteht sich, dass man eine einstellbare Drossel auch dadurch realisieren kann, dass man eine Mehrzahl parallel geschalteter Festdrosseln verwendet, die über Magnetventile freigegeben werden.

Alternativ kann die Steuerung der Spülluftmenge durch ein Proportionalventil erfolgen.

Dabei stehen jeweils wieder die drei oben geschilderten Möglichkeiten der Steuerung nach dem Druck im Auslaß, auf Zeitbasis und nach dem Feuchtigkeitsgehalt der abgegebenen Spülluft einzeln und in Kombination zur Verfügung.

Abgesehen von der abgewandelten Art der Steuerung der Strömungsverbindung zwischen Trocknereinheit 10 und Druckluft-Vorratsbehälter 14 arbeiten die Ausführungsbeispiele nach den Figuren 5 und 6 ähnlich wie die nach den Figuren 1 bis 4.

Bei den Kopfstücken 18 und 20 sowie beim Zyklongehäuse 102 und dem Zyklonteils 108 handelt es sich vorzugsweise um Spritzteile aus Metall oder Kunststoff bzw. faserverstärktem Kunststoff. Das zylindrische Gehäuseteil 16 kann ein Abschnitt aus einem extrudierten Metall- oder Kunststoffprofil sein, welche soweit notwendig, mechanisch nachbearbeitet ist.

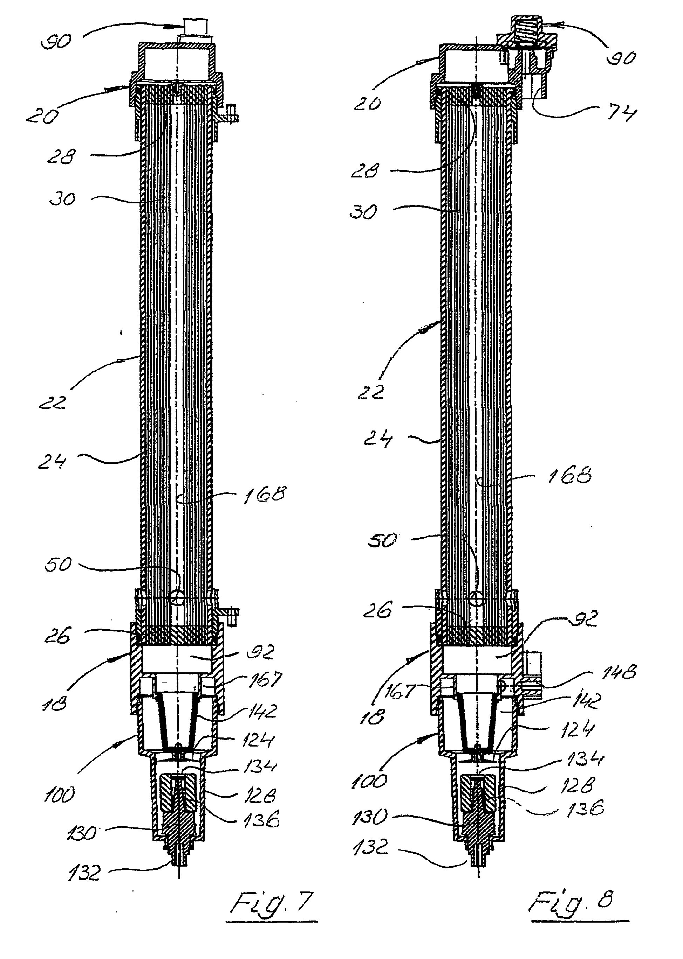

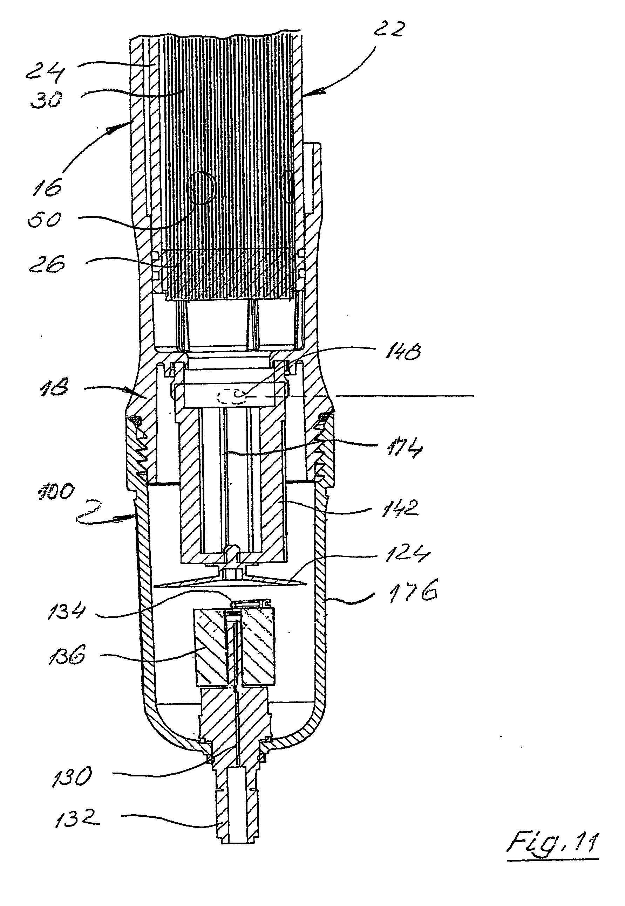

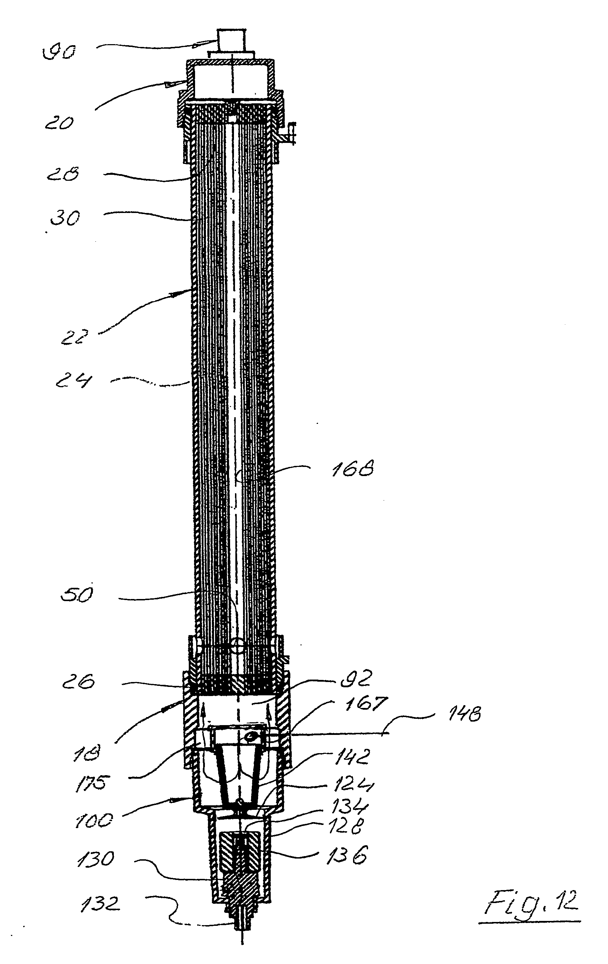

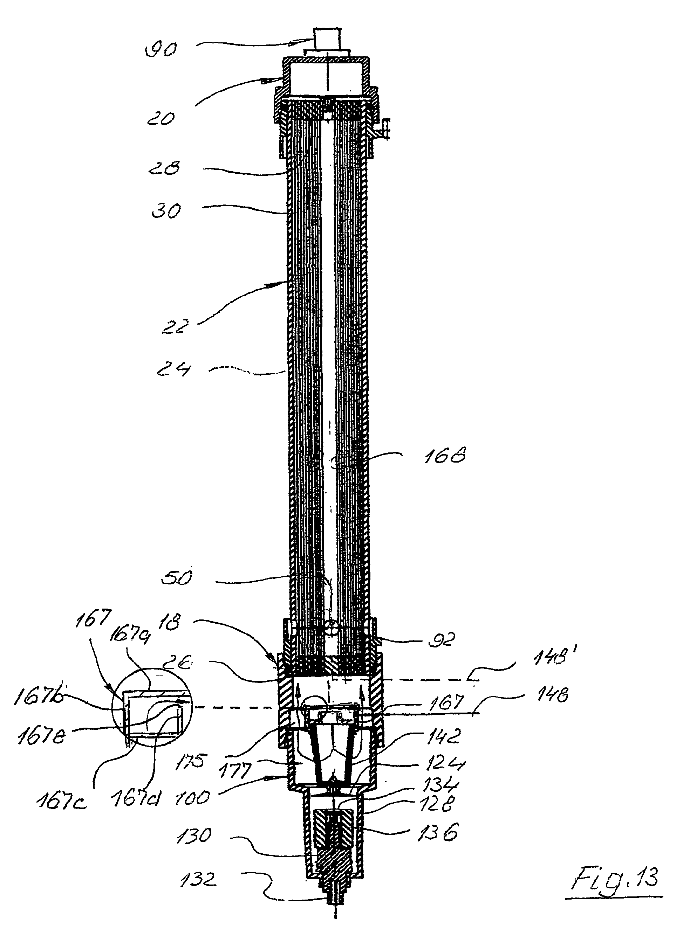

In den weitere Ausführungsformen zeigenden Figuren 7 bis 11 sind Komponenten, die obenstehend schon angesprochenenen von der Funktion her entsprechen, wieder mit denselben Bezugszeichen versehen, auch wenn sie sich in Einzelheiten unterscheiden. Diese Komponenten werden nachstehend nicht nochmals detailliert beschrieben.

Bei den Ausführungsbeispielen nach den Figuren 7 bis 11 ist das Gehäuseteil 16 entfallen. Die Patronenhülse 24 stellt zugleich die fluidische Trennung zur Umgebungsatmoshäre sicher.

Das Rückhaltefilter 142 ist als aus hydrophobem Sintermaterial hergestelltes Koaleszenzfilter ausgebildet und hat die Gestalt eines an einem Tragring 167 des Kopfstückes 18 hängenden unten verschlossenen Kegelstumpfes. Die untere Deckwand des Kegelstumpfes trägt die Abtropfscheibe 124.

Der Einlaß 148 mündet tangential in den Zyklon 100 ein. Die Luft wird so durch Zentrifugieren von Tröpfchen befreit, bevor sie von außen nach innen das Rückhaltefilter 142 durchströmt und in den unteren Kopfraum 92 gelangt.

Die Einspeisung der Spülluft erfolgt zentral über den in der Mitte der Halteplatte 28 vorgesehenen Kanal 62.

Auch ist ein zentraler Kernraum 168 der Patrone 22 frei von Membranfasern 30, um die unteren Bereiche der Membranfasern ausreichend mit frischer Spülluft zu versorgen.

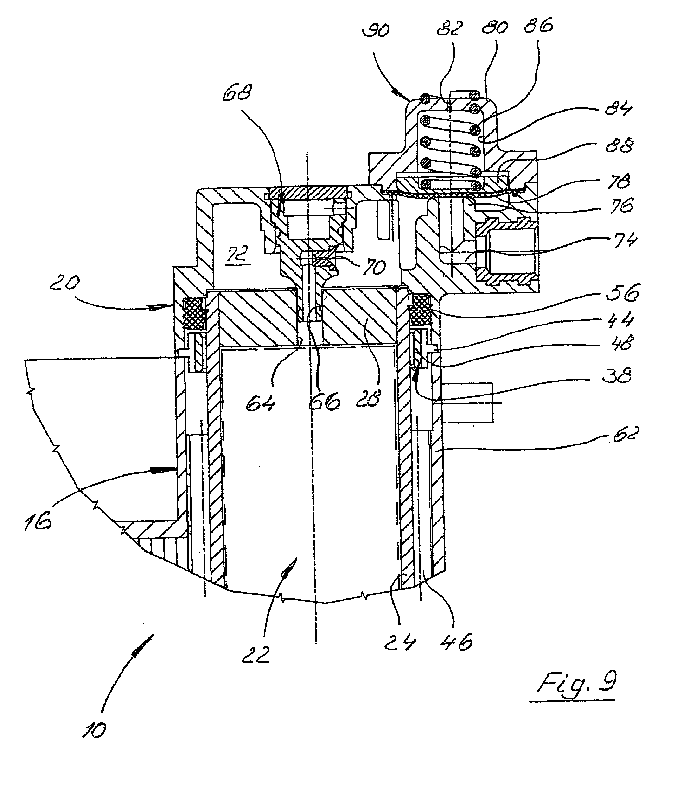

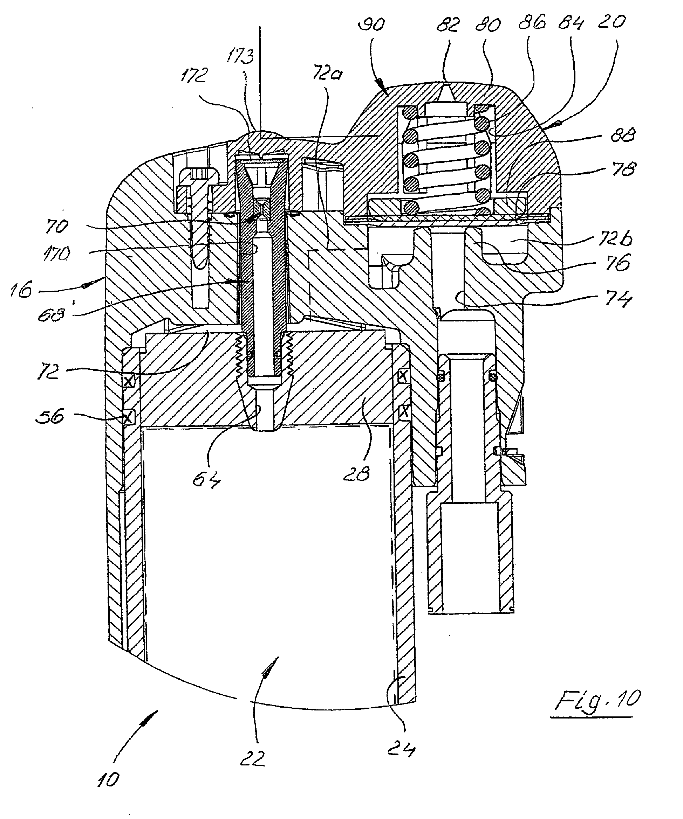

Das Kopfstück 20 nach Figur 10 hat eine andere, kleinere Trennfläche zum Gehäuseteil 16, ist von der Funktion her aber dem Kopfstück nach Figur 9 vergleichbar.

Der obere Kopfraum 72 ist bei ihm über einen Gehäusekanal 72a mit einem Einlaßraum 72b des Auslassventiles 90 verbundene Die Spülluftzufuhr zur Drossel 70 erfolgt über einen Spalt, der zwischen einer das Düsenteil 68 aufnehmenden Bohrung 170 und der Außenfläche des Düsenteiles 68 liegt und zur hinteren stirnfläche des Düsenteiles 68 führt. Diese trägt eine poröse Signalscheibe 172.

Diese wird auf Grund ihrer Anordnung von Luft umspült, die aus dem oberen Kopfraum 72 stammt und als Spülluft über die Drossel 70 zur Innsenseite des Membranfaser-Paketes geleitet wird. Die Signalscheibe ist aus einem Material gefertigt, dessen Aussehen sich in Abhängigkeit vom Feuchtigkeitsgehalt der durch sie strömenden Luft ändert, wobei ein Farbwechsel bevorzugt ist.

Änderungen in der Struktur der Oberfläche oder Änderungen in der Geometrie der signalscheibe wären aber auch geeignet.

In das aus transparentem Material gefertigte Kopfteil 20 ist eine Linse 173 eingearbeitet, welche eine klare und deutliche Beurteilung der Farbe der Signalscheibe auch aus Abstand ermöglicht.

Ferner ist der Auslaßkanal 74 parallel zur Achse der Patrone 22 ausgerichtet, was für manche Anwendungen eine radial kompaktere Gesamtanordnung aus Trocknereinheit und Leitungsanschlüssen ermöglicht.

Obenstehend wurde die Erfindung am Beispiel der Trocknung von Druckluft erläutert. Es versteht sich, dass die Erfindung gleichermaßen auf die Trennung anderer Gasgemische unter Verwendung von Hohlfaser-Membranen anwendbar ist.

## Patentansprüche

1. Trocknereinheit für Druckluft und andere gasförmige Medien, mit einem Gehäuse (16, 18, 20), welches einen Einlass (148) für zu trocknende Luft und einen Auslass (74) für getrocknete Luft ausweist, mit einer Tauschereinheit (22), welche eine Vielzahl von hohlen Membranfasern (30) aufweist, deren Enden offen in zwei Halteplatten (26, 28) festgelegt sind, welche zusammen mit dem Gehäuse (16, 18, 20) einen Einlass-seitigen Kopfraum (92) und einen Auslass-seitigen Kopfraum (72) begrenzen, wobei ein mit den Außenflächen der Membranfasern (30) in Verbindung stehender Spülluftraum einen Spullufteinlass (52) und einen Spülluftauslass (50) aufweist und mit einem Teil der getrockneten Luft beaufschlagt ist, wobei der Auslass-seitige Kopfraum (72) mit dem Auslass (74) über ein Auslassventil (90) in Verbindung steht und der Spüllufteinlass (52) mit dem Auslass-seitigen Kopfraum (72) ständig verbunden ist und wobei das Auslassventil auf Zeitbasis und/oder in Abhängigkeit von dem im Auslass-seitigen Kopfraum (72) herrschenden Druck und/oder vom Feuchtigkeitsgehalt der am Spülluftauslaß (50) abgegebenen Spülluft gesteuert wird.

2. Trocknereinheit für Druckluft und andere gasförmige Medien, mit einem Gehäuse (16, 18, 20), welches einen Einlass (148) für zu trocknende Luft und einen Auslass (74) für getrocknete Luft ausweist, mit einer Tauschereinheit (22), welche eine Vielzahl von hohlen Membranfasern (30) aufweist, deren Enden offen in zwei Halteplatten (26, 28) festgelegt sind, welche zusammen mit dem Gehäuse (16, 18, 20) einen Einlass-seitigen Kopfraum (92) und einen Auslass-seitigen Kopfraum (72) begrenzen, wobei ein mit den Außenflächen der Membranfasern (30) in Verbindung stehender Spülluftraum einen Spüllufteinlass (52) und einen Spülluftauslass (50) aufweist und mit einem Teil der getrockneten Luft beaufschlagt ist, wobei der Auslass-seitige Kopfraum (72) mit dem Auslass (74) über eine Auslassdrossel (164) in Verbindung steht und der Spüllufteinlass (52) mit dem Auslass-seitigen Kopfraum (72) ständig verbunden ist und wobei die Auslassdrossel (164) auf Zeitbasis und/ oder in Abhängigkeit vom im Auslass-seitigen Kopfraum (72) herrschenden Druck und/ oder vom Feuchtigkeitsgehalt der am Spülluftauslaß (50) abgegebenen Spülluft einstellbar ist.

3. Trocknereinheit nach Anspruch 1, **dadurch gekennzeichnet, dass** das Auslassventil (90) als Druckregler ausgebildet ist.

4. Trocknereinheit nach Anspruch 1 oder 3, **dadurch gekennzeichnet, dass** das Auslassventil (90) ein flächiges Steuerelement (78) aufweist, welches einerseits mit dem Auslass-seitigen Kopfraum (72) kommuniziert und andererseits mit einem Ventilsitz (76) zusammenarbeitet, der mit dem Auslass (74) für getrocknete Luft kommuniziert.

5. Trocknereinheit nach Anspruch 4, **dadurch gekennzeichnet, dass** das Steuerelement (78) durch eine kreisförmige Membran gebildet ist und der Ventilsitz (76) zylindrisch ist und koaxial zum Steuerelement (78) angeordnet ist.

6. Trocknereinheit nach Anspruch 4 oder 5, **dadurch gekennzeichnet, dass** das Steuerelement (78) durch eine Feder (86) in die Schließstellung vorgespannt ist.

7. Trocknereinheit nach Anspruch 1, **dadurch gekennzeichnet, dass** das Auslassventil (90) ein Magnetventil ist, welches in Abhängigkeit vom Ausgangssignal eines mit dem Auslass-seitigen Kopfraumes (72) in Verbindung stehenden Druckfühlers (162) gesteuert wird.

## Claims

1. Dryer unit for compressed air and other gaseous media, with a housing (16, 18, 20), which has an in-let (148) for air to be dried and an outlet (74) for dried air, with an exchanger unit (22), which has a multiplicity of hollow membrane fibres (30), the ends of which are fixed, open, in two holding plates (26, 28) which, together with the housing (16, 18, 20), delimit an inlet-side head space (92) and an outlet-side head space (72), a purging air space, connected to the outer surfaces of the membrane fibres (30), having a purging air inlet (50) and a purging air outlet (52) and being charged with part of the dried air, wherein the outlet-side head space (72) is connected to the outlet (74) via an outlet valve (90) abd the outlet valve is controlled on a time basis and/or as a function of the pressure prevailing in the outlet-side head space (72) and/or of the moi-sture content of the purging air discharged at the purging air outlet (50).

2. Dryer unit for compressed air and other gaseous media, with a housing (16, 18, 20), which has an inlet (148) for air to be dried and an outlet (74) for dried air, with an exchanger unit (22), which has a multiplicity of hollow membrane fibres (30), the ends of which are fixed, open, in two holding plates (26, 28) which, together with the housing (16, 18, 20), delimit an inlet-side head space (92) and an outlet-side head space (72), a purging air space, connected to the outer surfaces of the membrane fibres (30), having a purging air inlet (50) and a purging air outlet (52) and being charged with part of the dried air, wherein the outlet-side head space (72) is permanently connected to the outlet (74) via an outlet throttle (164) and the outlet throttle is controlled on a time basis and/or as a function of the pressure prevailing in the outlet-side head space (72) and/or of the moisture content of the purging air discharged at the purging air outlet (50).

3. Dryer unit according to Claim 1, **characterised in that** the outlet valve (90) is designed as a pressure governor.

4. Dryer unit according to Claim 3 or 4, **characterised in that** the outlet valve (90) has a plane control element (78) which, on the one hand, communicates with the outlet-side head space (72) and, on the other hand, cooperates with a valve seat (76) which communicates with the outlet (74) for dried air.

5. Dryer unit according to Claim 4, **characterised in that** the control element (78) is formed by a circular membrane and the valve seat (76) is cylindrical and arranged coaxially with the control element (78) .

6. Dryer unit according to Claim 4 or 5, **characterised in that** the control element (78) is biased by a spring (86) into the closed position.

7. Dryer unit according to Claim 1, **characterised in that** the outlet valve (90) is a solenoid valve which is controlled as a function of the output signal of a pressure sensor (162) connected to the outlet-side head space (72).

## Revendications

1. Unité de séchage pour de l'air comprimé et d'autres fluides gazeux, avec un boîtier (16, 18, 20) qui présente une admission (148) pour de l'air à sécher et une évacuation (74) pour l'air séché, avec une unité échangeuse (22) qui présente une pluralité de fibres membranaires creuses (30) dont les extrémités sont immobilisées à l'état ouvert dans deux plaques de maintien (26, 28) qui délimitent conjointement avec le boîtier (16, 18, 20) une chambre de tête (92) côté admission et une chambre de tête (72) côté évacuation, sachant qu'une chambre d'air de balayage communiquant avec les surfaces extérieures des fibres membranaires (30) présente une admission d'air de balayage (52) et une évacuation d'air de balayage (50) et est alimentée par une partie de l'air séché, sachant que la chambre de tête (72) côté évacuation communique avec l'évacuation (74) par l'intermédiaire d'une soupape d'évacuation (90), et que l'admission d'air de balayage (52) est reliée en permanence à la chambre de tête (72) côté évacuation, et sachant que la soupape d'évacuation est commandée sur une base temporelle et/ou en fonction de la pression régnant dans la chambre de tête (72) côté évacuation et/ou en fonction de la teneur en humidité de l'air de balayage délivré à l'évacuation d'air de balayage (50).

2. Unité de séchage pour de l'air comprimé et d'autres fluides gazeux, avec un boîtier (16, 18, 20) qui présente une admission (148) pour de l'air à sécher et une évacuation (74) pour l'air séché, avec une unité échangeuse (22) qui présente une pluralité de fibres membranaires creuses (30) dont les extrémités sont immobilisées à l'état ouvert dans deux plaques de maintien (26, 28) qui délimitent conjointement avec le boîtier (16, 18, 20) une chambre de tête (92) côté admission et une chambre de tête (72) côté évacuation, sachant qu'une chambre d'air de balayage communiquant avec les surfaces extérieures des fibres membranaires (30) présente une admission d'air de balayage (52) et une évacuation d'air de balayage (50) et est alimentée par une partie de l'air séché, sachant que la chambre de tête (72) côté évacuation communique avec l'évacuation (74) par l'intermédiaire d'un étranglement d'évacuation (164), et que l'admission d'air de balayage (52) est reliée en permanence à la chambre de tête (72) côté évacuation, et sachant que l'étranglement d'évacuation (164) est commandé sur une base temporelle eb/ou en fonction de la pression régnant dans la chambre de tête (72) côté évacuation et/ou en fonction de la teneur en humidité de l'air de balayage délivré à l'évacuation d'air de balayage (50).

3. Unité de séchage selon la revendication 1, **caractérisée en ce que** la soupape d'évacuation (90) est réalisée sous forme de régulateur de pression.

4. Unité de séchage selon la revendication 1 ou 3, **caractérisée en ce que** la soupape d'évacuation (90) présente un élément de commande surfacique (78) qui, d'une part communique avec la chambre de tête (72) côté évacuation, et d'autre part coopère avec un siège de soupape (76) qui communique avec l'évacuation (74) pour l'air séché.

5. Unité de séchage selon la revendication 4, **caractérisée en ce que** l'élément de commande (78) est formé par une membrane circulaire, et le siège de soupape (76) est cylindrique et est disposé coaxialement à l'élément de commande (78).

6. Unité de séchage selon la revendication 4 ou 5, **caractérisée en ce que** l'élément de commande (78) est précontraint dans la position fermée par un ressort (86).

7. Unité de séchage selon la revendication 1, **caractérisée en ce que** la soupape d'évacuation (90) est une soupape à commande électromagnétique qui est commandée en fonction du signal de sortie d'un capteur de pression (162) relié à la chambre de tête (72) côté évacuation.
